# FASCICULE DE BREVET EUROPEEN

(11) **EP 4 473 257 B1**
(45) Date de publication et mention de la délivrance du brevet: **02.07.2025**
(21) Numéro de dépôt: 23714564.4
(22) Date de dépôt: 28.03.2023
(51) Int. Cl.: F25B 21/00

(54) **DISPOSITIF DE COMMANDE FLUIDIQUE NOTAMMENT POUR UNE MACHINE MAGNETOCALORIQUE ET MACHINE MAGNETOCALORIQUE EQUIPEE D'UN TEL DISPOSITIF**
FLUIDISCHE STEUERUNGSVORRICHTUNG INSBESONDERE FÜR EINE MAGNETOKALORISCHE MASCHINE UND MAGNETOKALORISCHE MASCHINE AUSGERÜSTET MIT EINER SOLCHEN VORRICHTUNG
FLUIDIC CONTROL DEVICE, IN PARTICULAR FOR A MAGNETOCALORIC MACHINE, AND MAGNETOCALORIC MACHINE EQUIPPED WITH SUCH A DEVICE

(30) Priorité: 13.04.2022 FR 2203388
(43) Date de publication de la demande: 11.12.2024
(73) Titulaire: magnoric, 67120 Duppigheim (FR)
(72) Inventeur: MARRAZZO, Frédéric, 67550 Vendenheim (FR); MULLER, Christian, 67000 Strasbourg (FR); TILL, Zoé, 67000 Strasbourg (FR)
(74) Mandataire: Ipsilon Lyon
(86) Numéro de dépôt international: PCT/EP2023/058035
(87) Numéro de publication internationale: WO 2023/198448

(56) Documents cités:
- EP-A1- 3 102 893
- EP-B1- 3 102 893
- WO-A1-2015/079313
- WO-A1-2015/097401
- WO-A1-2021/255040

## Description

### Domaine technique

La présente invention concerne un dispositif de commande fluidique, notamment pour une machine magnétocalorique comportant au moins un distributeur fluidique raccordé à un circuit fluidique, ledit au moins un distributeur fluidique comportant un tiroir mobile agencé pour être déplacé entre deux positions de distribution, ledit dispositif de commande comportant une came mobile agencée pour coopérer avec un organe suiveur, ladite came mobile étant couplée à un actionneur, et ledit organe suiveur étant couplé au tiroir mobile dudit distributeur fluidique, ladite came mobile comportant un profil de came pourvu au moins d'un premier tronçon définissant une première position de distribution, d'un second tronçon définissant une seconde position de distribution, et d'une zone de transition reliant ledit premier tronçon audit second tronçon.

La présente invention concerne également une machine magnétocalorique comportant au moins un distributeur fluidique raccordé à un circuit fluidique, un arrangement magnétique, un ensemble d'éléments actifs à base de matériau magnétocalorique, ledit arrangement magnétique et ledit ensemble d'éléments actifs étant agencés pour être mobiles relativement l'un par rapport à l'autre, et un fluide caloporteur agencé pour circuler dans ledit circuit fluidique à travers lesdits éléments actifs.

### Technique antérieure

D'une manière connue, les distributeurs fluidiques, appelés également vannes, robinets ou similaires, disponibles dans le commerce, peuvent être commandés entre au moins deux positions de distribution par tout type d'actionneurs manuels, mécaniques, électriques, électroniques ou pneumatiques. Ces distributeurs peuvent comporter des organes de rappel, tels que des ressorts de compression ou similaires, qui permettent de mettre sous contrainte la partie mobile du distributeur dans une première position de distribution, et de réaliser le retour de la partie mobile d'une seconde position de distribution à la première position de distribution de matière automatique. La partie mobile du distributeur peut être un tiroir mobile en translation, un boisseau mobile en rotation, ou tout autre organe mobile équivalent.

Dans l'application visée par l'invention qui concerne notamment les machines magnétocaloriques et en particulier les générateurs de froid magnétique, on utilise des distributeurs fluidiques, tels que ceux disponibles dans le commerce, pour faire circuler un fluide caloporteur dans une première boucle thermique puis dans une seconde boucle thermique d'un circuit fluidique, la fréquence de commutation entre les deux boucles thermiques devant être synchronisée avec la fréquence de commutation des cycles magnétocaloriques de la machine. Les distributeurs fluidiques peuvent être commandés par une came mobile à simple effet, couplée à un actionneur dédié ou à l'ensemble mobile (rotor) de la machine, tel que décrit dans la publication EP 3 102 893 A1 qui divulgue un dispositif de commande fluidique selon le préambule de la revendication 1.

La came mobile a généralement un profil de came en forme de L.

La partie mobile des distributeurs fluidiques est dans ce cas solidaire d'un galet agencé pour circuler sur le profil de came, sous l'action d'un organe de rappel précontraint. La précontrainte de l'organe de rappel génère un effort perpendiculaire au profil de came, entrainant un frottement important entre le galet et la came. Ce frottement induit de nombreux inconvénients tels que :
- un sur-couple et donc une surconsommation au niveau de l'actionneur dédié ou du moteur d'entrainement du rotor,
- une usure prématurée de la came, du galet et de l'organe de rappel,
- un retard voire un blocage des distributeurs lors du retour de l'organe de rappel dans sa position de précontrainte.

Or dans le domaine des machines magnétocaloriques, on cherche en permanence à améliorer le niveau de performances pour augmenter le rendement de conversion d'énergie thermique en travail et inversement selon le mode opératoire de la machine. Pour ce faire, on cherche en permanence à optimiser les différents paramètres, tels que l'intensité et la qualité du champ magnétique, les performances du matériau magnétocalorique, la surface d'échange thermique entre le fluide caloporteur et les éléments actifs à base de matériau magnétocalorique, les performances des échangeurs de chaleur, etc.

Les publications WO2009/087310 et WO2015/079313 appartenant à la demanderesse donnent un aperçu des évolutions techniques déjà apportées aux machines magnétocaloriques, qui peuvent être encore améliorées.

### Exposé de l'invention

La présente invention vise à proposer une nouvelle piste d'amélioration en agissant sur la commande fluidique de ce type de machines ou d'autres, pour réduire, voire supprimer les efforts parasites dus aux frottements entre le galet et la came, permettant ainsi d'optimiser l'actionneur dédié et/ou le déplacement du rotor avec un minimum de couple, de réduire la consommation d'énergie nécessaire au fonctionnement de la machine, d'atteindre une meilleure maitrise de la zone de transition entre deux cycles de distribution, et un meilleur réglage de la position des distributeurs par rapport à la came, générant moins d'usure, et permettant d'obtenir un fonctionnement global de la machine plus durable et fiable, pour un rendement optimisé.

Dans ce but, l'invention concerne un dispositif de commande fluidique du genre indiqué en préambule, caractérisé en ce que ladite came est une came à double effet agencée pour déplacer ledit organe suiveur en translation alternative dans un sens et dans le sens opposé correspondant respectivement à ladite première position de distribution et à ladite seconde position de distribution dudit distributeur, et en ce que ledit organe suiveur comporte un premier élément de guidage agencé pour circuler librement dans ladite came, et un second élément de guidage agencé pour circuler librement dans une glissière fixe par rapport audit au moins un distributeur, pour guider ledit organe suiveur en translation alternative entre lesdites deux positions de distribution.

Dans une forme préférée de l'invention, le profil de ladite came comporte une gorge en forme de U agencée pour entraîner ledit premier élément de guidage dans les deux sens de déplacement.

De préférence, ledit organe suiveur s'étend dans un axe perpendiculaire à l'axe du distributeur et à l'axe du profil de ladite came. Il peut avantageusement comporter deux extrémités libres opposées, le premier élément de guidage et le second élément de guidage étant fixés respectivement auxdites extrémités libres.

Le premier élément de guidage et/ou le second élément de guidage dudit organe suiveur peut être choisi dans le groupe comportant un roulement, un galet, un coussinet, un patin, un doigt.

La glissière fixe peut être prévue dans une pièce de fixation solidaire dudit au moins un distributeur fluidique, et ledit au moins un distributeur peut comporter des moyens de réglage agencés pour ajuster la position de son tiroir mobile et de l'organe suiveur par rapport à ladite came.

Selon les variantes de réalisation de l'invention, ladite came peut être circulaire et entrainée en rotation continue, ledit profil de came étant dans ce cas fermé sur lui-même. Ladite came peut également être rectiligne et entrainée en translation alternative, ledit profil de came étant dans ce cas ouvert. Dans tous les cas, ladite came peut être formée d'une pièce unique, ou d'au moins deux pièces complémentaires pour faciliter sa fabrication et son montage.

Dans ce but également, l'invention concerne une machine magnétocalorique du genre indiqué en préambule, caractérisée en ce qu'elle comporte un dispositif de commande fluidique tel que défini ci-dessus, couplé audit au moins un distributeur fluidique et agencé pour faire circuler ledit fluide caloporteur dans une première boucle thermique dudit circuit fluidique puis dans une seconde boucle thermique dudit circuit fluidique en fonction d'une fréquence de commutation déterminée.

En fonction des variantes de réalisation de l'invention, ledit dispositif de commande fluidique peut être séparé dudit arrangement magnétique et dudit ensemble d'éléments actifs, ladite came étant dans ce cas couplée à un actionneur dédié. Ledit dispositif de commande fluidique peut également être intégré audit arrangement magnétique et audit ensemble d'éléments actifs, ladite came étant dans ce cas couplée à un ensemble mobile de la machine portant ledit arrangement magnétique ou ledit ensemble d'éléments actifs.

Ladite machine magnétocalorique peut comporter un distributeur fluidique par élément actif agencé pour distribuer ledit fluide caloporteur alternativement dans ladite première boucle thermique et dans ladite seconde boucle thermique, ledit dispositif de commande fluidique comportant dans ce cas une came.

Elle peut également comporter deux distributeurs fluidiques par élément actif agencés chacun pour distribuer ledit fluide caloporteur dans une de ladite première boucle thermique ou de ladite seconde boucle thermique, ledit dispositif de commande fluidique comportant dans ce cas deux cames parallèles.

Selon les variantes de réalisation de l'invention, ledit au moins un distributeur peut être disposé axialement et parallèlement à l'axe dudit actionneur dédié ou dudit ensemble mobile. Il peut aussi être disposé radialement et perpendiculairement à l'axe dudit actionneur dédié ou dudit ensemble mobile.

Lorsque dans la machine magnétocalorique, ledit ensemble mobile porte ledit arrangement magnétique, alors ladite came peut être fixée sur ledit ensemble mobile, et comporter des moyens de réglage agencés pour ajuster la position relative de la came par rapport aux pôles magnétiques dudit arrangement magnétique.

### Brève description des dessins

La présente invention et ses avantages apparaîtront mieux dans la description suivante de plusieurs modes de réalisation donnés à titre d'exemples non limitatifs, en référence aux dessins annexés, dans lesquels :
- La figure 1 est un schéma de fonctionnement d'une machine magnétocalorique selon l'invention,
- La figure 2 est une vue en perspective d'une machine magnétocalorique carénée, vue depuis une de ses extrémités axiales comportant des distributeurs fluidiques disposés radialement coopérant avec un dispositif de commande fluidique selon l'art antérieur,
- La figure 3 est une vue en perspective d'une partie agrandie de la machine de la figure 2, montrant des distributeurs fluidiques disposés axialement coopérant avec un dispositif de commande fluidique selon l'invention,
- La figure 4 est une vue en plan de la partie agrandie de la machine de la figure 3,
- La figure 5 est une vue en coupe axiale agrandie du dispositif de commande fluidique de l'invention associé à un distributeur fluidique,
- La figure 6 est une vue en perspective d'une came mobile seule faisant partie du dispositif de commande fluidique de l'invention,
- La figure 7 est un schéma de principe d'une première variante de réalisation du dispositif de commande fluidique selon l'invention,
- La figure 8 est un schéma de principe d'une deuxième variante de réalisation du dispositif de commande fluidique selon l'invention,
- La figure 9 est un schéma de principe d'une troisième variante de réalisation du dispositif de commande fluidique selon l'invention, et
- La figure 10 est un schéma de principe d'une machine magnétocalorique selon une variante de l'invention, dans laquelle les distributeurs fluidiques et le dispositif de commande fluidique sont séparés du reste de la machine.

### Description des modes de réalisation

Dans les exemples de réalisation illustrés, les éléments ou parties identiques portent les mêmes numéros de référence. En outre, les termes qui ont un sens relatif, tels que vertical, horizontal, droite, gauche, avant, arrière, au-dessus, en-dessous, etc. doivent être interprétés dans des conditions normales d'utilisation de l'invention, et telles que représentées sur les figures. Les axes X, Y et Z sont quant à eux définis par un repère orthonormé illustré dans les différentes figures. Par ailleurs, les positions géométriques indiquées dans la description et les revendications, telles que « perpendiculaire », « parallèle », « symétrique » ne sont pas limitées au sens strict défini en géométrie, mais s'étendent à des positions géométriques qui sont proches, c'est-à-dire qui acceptent une certaine tolérance dans le domaine technique considéré, sans influence sur le résultat obtenu. Cette tolérance est notamment introduite par l'adverbe « sensiblement », sans que ce terme soit nécessairement répété devant chaque adjectif.

En référence aux figures, le dispositif de commande fluidique 10 selon l'invention intéresse en priorité les machines magnétocaloriques 1 pour les raisons exposées précédemment, mais s'étend à tout autre domaine technique dans lequel il est nécessaire de commuter un circuit fluidique selon une fréquence déterminée. Par machines magnétocaloriques 1, on entend aussi bien des générateurs thermiques, appelés aussi générateurs de froid magnétique, convertissant de l'énergie électrique et/ou mécanique en énergie thermique, utilisés dans une large gamme d'applications, telles que chauffage, refroidissement, climatisation, tempérage, que des convertisseurs d'énergie thermique, en énergie mécanique et/ou électrique, permettant d'exploiter notamment les chaleurs dites fatales ou perdues, ou similaires. Un exemple de machine magnétocalorique réversible est notamment décrit dans la publication de la demanderesse WO 2021/255040.

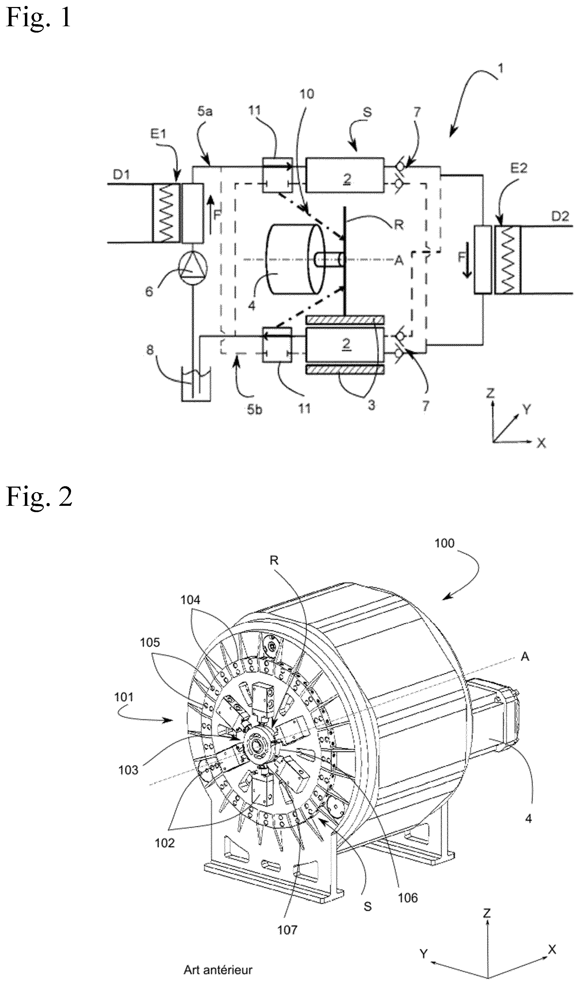

La figure 1 illustre schématiquement le fonctionnement d'une machine magnétocalorique 1 connue, décrite de manière succincte, étant donné qu'elle ne fait pas l'objet de l'invention en tant que telle. La description qui suit fait référence à une machine magnétocalorique 1, appelée également machine 1, fonctionnant en générateur thermique. Dans l'exemple représenté, la machine 1 comporte un ensemble fixe sous la forme d'un stator S pourvu d'un ensemble d'éléments actifs 2 en matériau magnétocalorique (MMC), et un ensemble mobile sous la forme d'un rotor R pourvu d'un arrangement magnétique formant des pôles magnétiques 3. Le rotor R est entrainé en rotation autour d'un axe A, parallèle à l'axe X du repère orthonormé, par un moteur 4 pour soumettre les éléments actifs 2 à une variation de champ magnétique et générer au sein desdits éléments actifs 2 une variante de température au voisinage de leur température de Curie. Bien entendu, la configuration inverse existe dans laquelle l'ensemble d'éléments actifs 2 est porté par un rotor R et l'arrangement magnétique 3 par un stator S, mais cette configuration complexifie le raccordement des éléments actifs 2 au circuit fluidique.

Dans la figure 1 et uniquement aux fins d'explication du fonctionnement de la machine 1, seuls deux éléments actifs 2 et seul un pôle magnétique 3 sont représentés. La machine 1 comporte un circuit fluidique 5 interne dans lequel circule un fluide caloporteur via une pompe 6 à travers lesdits éléments actifs 2 et des échangeurs de chaleur E1 et E2 pour restituer l'énergie thermique produite par les éléments actifs 2 à des dispositifs externes D1, D2. Selon les applications, le fluide caloporteur peut être liquide ou gazeux.

Le circuit fluidique 5 comporte deux boucles thermiques 5a et 5b du fluide caloporteur, à savoir une première boucle thermique 5a et une seconde boucle thermique 5b, couplées respectivement à un échangeur de chaleur E1, appelé échangeur chaud E1et un échangeur de chaleur E2, appelé échangeur froid E2. Les deux boucles thermique 5a, 5b sont raccordées en parallèle par un système de synchronisation agencé pour raccorder en série les éléments actifs 2 aux échangeurs de chaleur E1, E2 alternativement dans l'une et l'autre boucles thermiques 5a, 5b et créer une alternance de cycles thermiques à une fréquence déterminée, synchronisée avec l'alternance des cycles magnétocaloriques induits par la rotation du rotor R.

Le circuit fluidique 5 comporte en outre des organes de contrôle 7 du sens de circulation du fluide caloporteur dans les boucles thermiques 5a, 5b pour imposer un unique sens de circulation du fluide caloporteur dans les échangeurs de chaleur E1, E2, illustré par les flèches F. Il peut également comporter un réservoir tampon 8 de fluide caloporteur raccordé en série avec chacune des boucles thermiques 5a, 5b pour compenser les éventuelles pertes de fluide caloporteur et/ou les variations de volumes du fluide caloporteur en fonction de la température.

En référence à la figure 1, le fonctionnement de la machine 1 est brièvement décrit. Dans un premier cycle thermique, les distributeurs fluidique 11 sont dans une première position de distribution, telle qu'illustrée à la figure 1 et le fluide caloporteur circule dans une première boucle thermique 5a représentée en trait plein dans le sens des aiguilles d'une montre. Il traverse l'élément actif 2 situé en bas de la figure 1 qui subit un cycle d'échauffement étant situé dans le champ magnétique d'un des pôles magnétiques 3 du rotor R, traverse l'échangeur chaud E1 où il restitue la chaleur collectée à un dispositif externe D1, puis traverse l'élément actif 2 situé en haut de la figure 1 qui subit un cycle de refroidissement étant situé en dehors du champ magnétique, traverse l'échangeur froid E2 où il restitue le froid collecté à un dispositif externe D2.

Dans un second cycle thermique, les distributeurs fluidique 11 sont dans une seconde position de distribution, non illustrée à la figure 1, et le fluide caloporteur circule dans une seconde boucle thermique 5b représentée en trait interrompu court dans le sens inverse des aiguilles d'une montre. Il traverse l'élément actif 2 situé en bas de la figure 1 qui subit à présent un cycle de refroidissement étant situé en dehors du champ magnétique (non représenté), traverse l'échangeur froid E2 où il restitue le froid collecté à un dispositif externe D2, puis traverse l'élément actif 4 situé en haut de la figure 1 qui subit à présent un cycle d'échauffement étant situé dans le champ magnétique d'un des pôles magnétiques 3 du rotor R, traverse l'échangeur chaud E1 où il restitue la chaleur collectée à un dispositif externe D1.

Les premiers et seconds cycles thermiques se répètent grâce au système de synchronisation qui comporte des distributeurs fluidiques 11 commandés selon une fréquence de commutation déterminée par un dispositif de commande fluidique 10, objet de l'invention et décrit ci-après.

La machine magnétocalorique 1 telle que représentée dans la figure 1 et dans les autres figures est décrite selon une configuration cylindrique dans laquelle le rotor R est animé d'un mouvement de rotation continue, sans que cet exemple ne soit limitatif. En effet, une machine magnétocalorique 1 de configuration linéaire est tout à fait envisageable, dans laquelle le stator S et le rotor R sont mis à plat, et le rotor R est animé d'un mouvement de translation alternative.

Plus particulièrement à la figure 2, la machine magnétocalorique 100 comporte à l'une de ses extrémités axiales 101 des distributeurs fluidiques 102 disposés radialement, coopérant avec un dispositif de commande fluidique 103 tel que décrit dans la publication de la demanderesse WO 2021/255040. La machine 100 comporte des éléments actifs (non visibles) portés par un porte-matériaux 104 formant un stator S, pourvu de raccords fluidiques 105 accessibles depuis l'extrémité axiale représentée. Les raccords fluidiques 105 comportent au moins une entrée de fluide et une sortie de fluide par élément actif. La tuyauterie permettant le raccordement des raccords fluidiques 105 aux distributeurs 102 n'est pas représentée pour ne pas surcharger la figure.

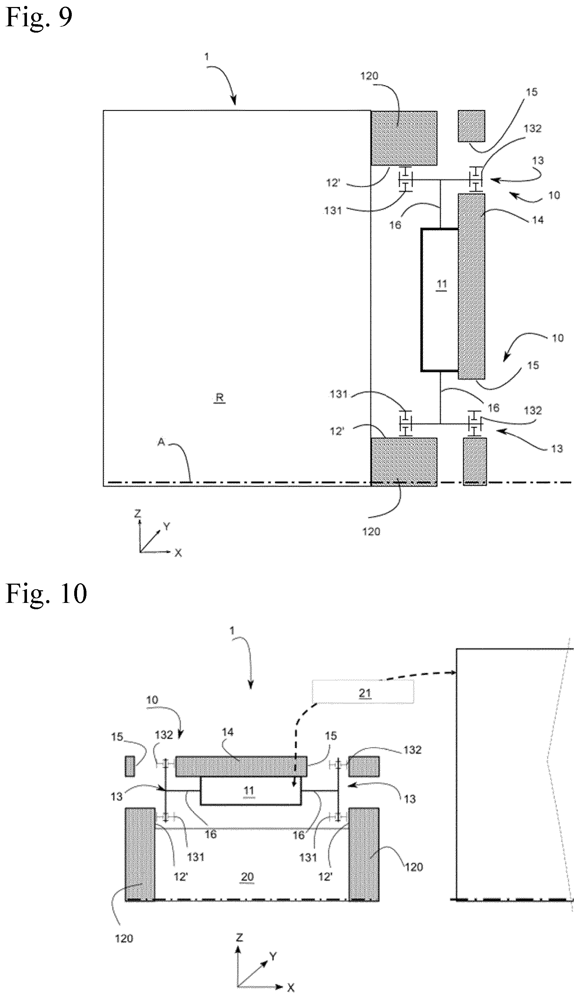

Les distributeurs fluidiques 102 sont dans l'exemple représenté des vannes à tiroir. Le dispositif de commande fluidique 103 comporte une came mobile 106 et des galets suiveurs 107 agencés pour circuler sur la came 106. La came 106 est couplée à un actionneur qui peut être un actionneur dédié 20 (figure 10) ou l'actionneur du rotor R de la machine 100, à savoir le moteur 4 tel que représenté (figures 1 et 2). S'il s'agit d'un actionneur dédié 20, une unité de pilotage (non représentée) est prévue pour synchroniser le fonctionnement de l'actionneur dédié 20 de la came 106 avec le moteur 4 du rotor R, dans le cas d'un générateur de froid magnétique. Dans cet exemple, la came 106 comporte un profil de came à simple effet, c'est-à-dire active dans un seul sens de déplacement. Le profil de came présente dans ce cas une section en forme de L. En outre, les galets suiveurs 107 sont solidaires des tiroirs (non visibles) des distributeurs 102 et les distributeurs 102 comportent des organes de rappel (non visibles) précontraints qui assujettissent les galets suiveurs 107 contre le profil de came générant nécessairement un frottement important entre le galet 107 et la came 106, ce que l'on veut éviter.

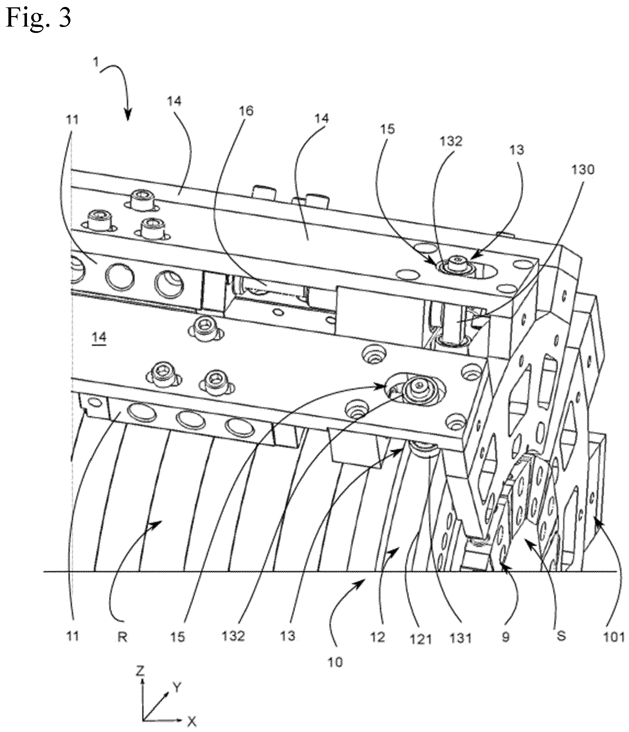

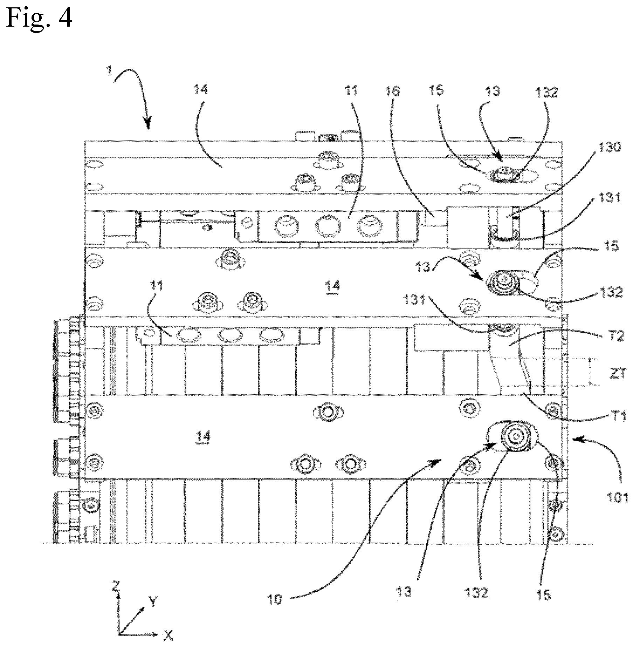

En référence à présent aux figures 3 à 6, les distributeurs fluidiques 11 selon l'invention, appelés également distributeurs 11, sont de préférence des vannes à tiroir, dans lesquels le tiroir (non visible) est mobile en translation alternative entre deux positions de distribution, libres, sans aucune précontrainte, ni organe de rappel, pour ouvrir et fermer des orifices d'entrée et de sortie des distributeurs en fonction d'un schéma de distribution déterminé. Le dispositif de commande fluidique 10 selon l'invention, appelé également dispositif de commande 10, comporte à cet effet une came mobile 12, appelée également came 12, ayant un profil de came à double effet c'est-à-dire active dans les deux sens de déplacement opposés. Le profil de came présente dans ce cas une section en forme de U. Dans l'exemple représenté, la came mobile 12 est directement solidaire du rotor R de la machine 1 et coopère avec un organe suiveur 13 solidaire du tiroir des distributeurs fluidiques 11. Bien entendu, la came mobile 12 pourrait également être couplée à un actionneur dédié 20 comme représenté à la figure 10.

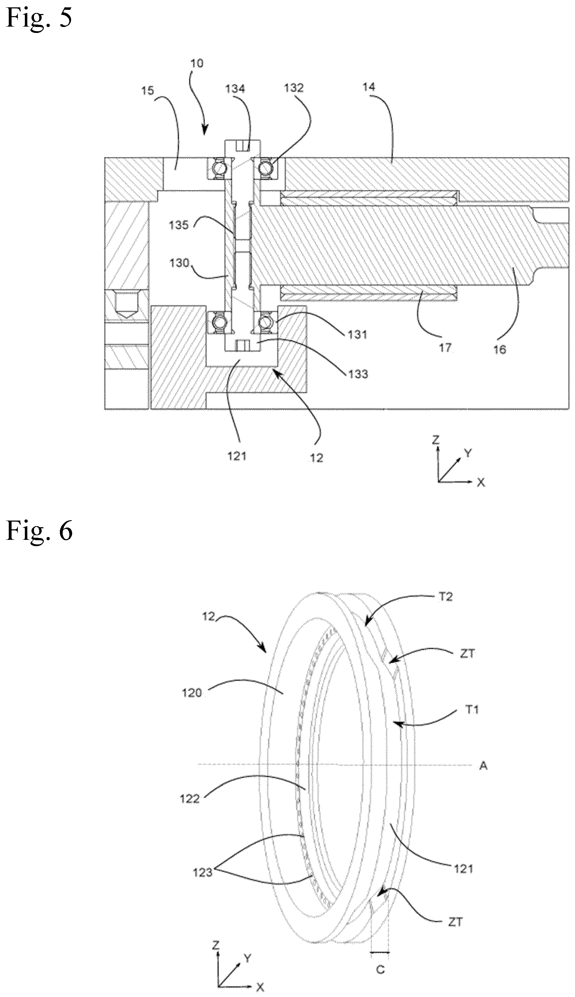

La came 12 est représentée en détail à la figure 6. Elle comporte un anneau 120, dont l'axe de révolution est destiné à être confondu avec l'axe A du rotor R, pourvu d'une gorge 121 circulaire dans sa périphérie extérieure, ouverte radialement selon l'axe Z et s'étendant selon l'axe Y. La gorge 121 définit un profil de came en U, et comporte dans l'exemple représenté deux premiers tronçons T1 diamétralement opposés, définissant une première position de distribution, deux seconds tronçons T2 diamétralement opposés, définissant une seconde position de distribution, alternés avec les premiers tronçons T1, et quatre zones de transition ZT reliant chacune un premier tronçon T1 à un second tronçon T2 adjacent. Ainsi, le nombre de couples de tronçon T1+T2 prévus dans la came 12 correspond au nombre de pôles magnétiques 3 de la machine 1. La came 12 peut donc comporter un couple de tronçons T1+T2 si la machine 1 comporte un seul pôle magnétique 3, et plus de deux couples de tronçons T1+T2 si la machine 1 comporte plus de deux pôles magnétiques 3. Les tronçons T1 et T2 sont rectilignes, parallèles à l'axe Y et donc perpendiculaires à l'axe X. Les premiers tronçons T1 et les seconds tronçons T2 sont décalés entre eux d'une course C correspondant à la course des tiroirs mobiles des distributeurs 11 entre deux positions de distribution. Enfin les zones de transition ZT sont inclinées par rapport à l'axe Y pour assurer la continuité du profil de came entre les différents tronçons T1 et T2. L'angle d'inclinaison des zones de transition ZT est déterminé pour réduire au maximum le temps de commutation, mais sans pénaliser la circulation continue de l'organe suiveur 13 dans la gorge 121. Cet angle peut être compris entre 10° et 60° sans que ces valeurs ne soient limitatives.

La came 12 comporte également une bride de fixation 122 sur sa périphérie intérieure perforée d'une pluralité de trous de fixation 123. La came 12 est prévue pour être fixée directement et solidairement à l'ensemble mobile de la machine 1. Dans l'exemple représenté, l'ensemble mobile de la machine 1 comporte deux rotors R coaxiaux, à savoir un rotor intérieur et un rotor extérieur, entre lesquels est disposé l'ensemble fixe formant un stator S portant les éléments actifs. Dans cet exemple, la came mobile 12 est fixée au rotor R extérieur représenté très partiellement par son enveloppe externe sur les figures. La pluralité de trous de fixation 123 forme des moyens de réglage de la position angulaire de la came 12 par rapport aux pôles magnétiques 3 portés par les rotors R. En effet, chaque premier tronçon T1 de la came 12 doit être aligné sur un des pôles magnétiques 3, et chaque second tronçon T2 de la came 12 doit être aligné sur la zone vide ou amagnétique séparant deux pôles magnétiques 3, ou inversement. Ainsi, chaque tronçon T1 et T2 aménagé dans la came 12 correspond exactement à un cycle de travail de la machine, qui correspond dans cette application spécifique, à un cycle magnétocalorique d'échauffement et un cycle magnétocalorique de refroidissement. La came mobile 12 est illustrée sous la forme d'une pièce unique mais peut bien entendu être formée de deux pièces complémentaires, correspondant chacune à un demi-anneau, ou de plus de deux pièces complémentaires, correspondant chacune à un secteur annulaire, lesdites pièces pouvant être identiques ou non, dans le but de faciliter sa fabrication et son montage sur le rotor R.

Dans l'exemple représenté dans les figures 3 à 5, les distributeurs fluidiques 11 sont disposés axialement, c'est-à-dire parallèlement à l'axe A du rotor R ou l'axe X du repère orthonormé, et perpendiculairement à l'axe Y de la came 12. Ils sont représentés par des blocs parallélépipédiques pourvus d'orifices d'entrée d'un côté et d'orifices de sortie du côté opposé. Dans cet exemple, il peut s'agir de vannes à 5/2 voies, 4/2 voies ou similaires, qui peuvent assurer chacune la distribution du fluide caloporteur dans les deux boucles thermiques 5a, 5b du circuit fluidique 5. Dans ce cas, la machine 1 comporte un nombre de distributeurs fluidiques 11, égal au nombre d'éléments actifs 2. Les distributeurs 11 peuvent également comporter des vannes à 4/2 voies, 3/2 voies ou similaires, qui peuvent chacune assurer la distribution du fluide caloporteur dans une seule des deux boucles thermiques 5a, 5b du circuit fluidique 5, évitant ainsi le mélange du fluide caloporteur lors des phases de commutation dans les zones de transition ZT. Dans ce cas, le nombre de distributeurs 3/2 ou 4/2 nécessaire pour une même machine 1 est le double du nombre de distributeurs 5/2.

Les distributeurs 11 sont fixés sur un ensemble fixe de la machine 1, comme le porte-matériaux 9 du stator S, chacun au moyen d'une pièce de fixation 14 qui s'étend axialement dans l'axe X, se prolonge au moins d'un côté des distributeurs 11 pour chevaucher la came 12, puis s'étend radialement dans l'axe Z jusqu'au porte-matériaux 9. La pièce de fixation 14 comporte en outre au droit de la came 12 une glissière 15, formée dans l'exemple représenté, par une lumière oblongue d'axe X, et dont la longueur est au moins égale à la course C du tiroir. Le tiroir de chaque distributeur 11 est prolongé par une tige de commande 16 portant à son extrémité libre un organe suiveur 13. Chaque distributeur 11 peut en outre comporter un moyen de réglage, sous la forme par exemple d'un système vis-écrou ou similaire, permettant d'ajuster la position relative de l'organe suiveur 13 par rapport à la came 12, et simultanément la position relative du tiroir par rapport aux orifices d'entrée et de sortie du distributeur 11.

L'organe suiveur 13 fait partie du dispositif de commande fluidique 10 de l'invention et coopère avec la came mobile 12 qui génère son déplacement en translation alternative selon l'axe X dans un sens et dans le sens opposé correspondant respectivement à une première position de distribution et à une seconde position de distribution du distributeur 11. Dans cet exemple, la tige de commande 16 du tiroir présente une forme de T, la barre du T formant l'organe suiveur 13. Ainsi, l'organe suiveur 13 s'étend dans l'axe Z perpendiculaire à l'axe X du distributeur 11 et à l'axe Y de la came 12.

L'organe suiveur 13 comporte un barreau 130 rectiligne, possédant deux extrémités libres opposées, portant respectivement un premier élément de guidage 131 et un second élément de guidage 132. Le premier élément de guidage 131 est agencé pour circuler librement dans la gorge 121 de la came 12 selon l'axe Y. Le second élément de guidage 132 est agencé pour circuler librement dans la glissière 15 de la pièce de fixation 14 des distributeurs 11 selon l'axe X, et guider ainsi l'organe suiveur 13 en translation alternative entre les deux positions du distributeur 11, supprimant ses autres degrés de liberté, et en particulier sa rotation autour de l'axe X du distributeur 11. Dans l'exemple représenté, les éléments de guidage 131, 132 sont constitués de roulements, mais pourraient être constitués de galets, coussinets, patins, doigts, ou de tout autre organe tournant ou glissant, l'essentiel étant de créer un contact roulant ou à faible coefficient de frottement respectivement avec la came 12 et la glissière 15 pour réduire voire supprimer les frottements. Il est également possible d'ajouter une lubrification et d'enfermer le dispositif de commande 10 dans un carter contenant ledit lubrifiant.

La figure 5 montre un détail de construction de l'organe suiveur 13. Les roulements formant respectivement le premier élément de guidage 131 et le second élément de guidage 132 sont rapportés aux extrémités libres du barreau 130 et fixés au moyen de vis de fixation 133, 134 dans un alésage 135 taraudé. Le barreau 130 peut faire partie intégrante de la tige de commande 16 ou être rapporté. Bien entendu, tout autre mode de réalisation équivalent de l'organe suiveur 13 peut convenir. Cette figure 5 montre également une bague de guidage 17 agencée pour guider en translation la tige de commande 16 du tiroir du distributeur, rapportée sur la pièce de fixation 14, ou sur la tige de commande 16, ou sur les deux s'il s'agit d'une bague de guidage double.

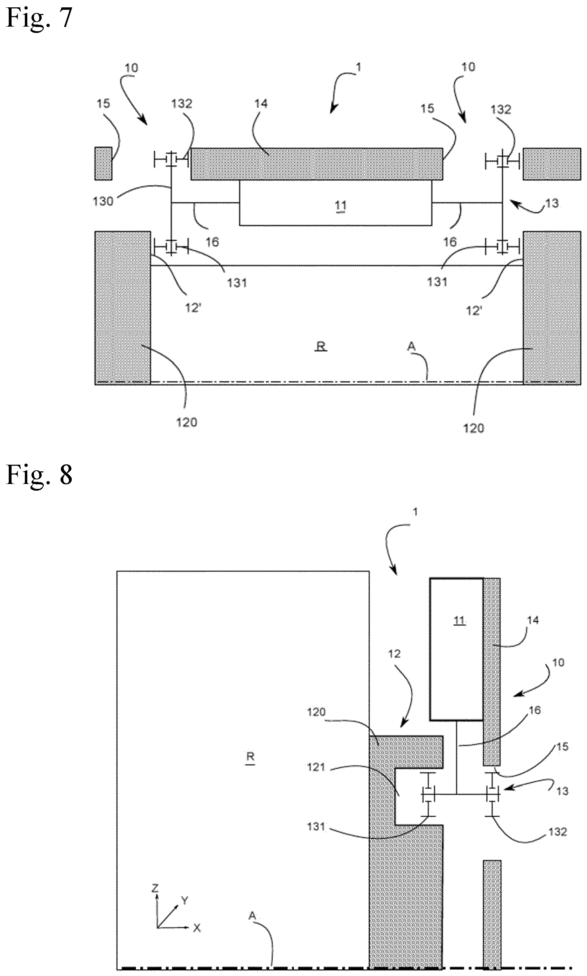

Dans les figures 3 à 5, la machine 1 comporte pour chaque élément actif 2 un distributeur fluidique 11 disposé axialement et commandé par une seule came mobile 12 disposée à l'une des extrémités axiales de la machine 1. Cet exemple de construction n'est pas le seul, et les figures 7 à 9 illustrent schématiquement d'autres exemples de construction du dispositif de commande fluidique 10 selon l'invention.

La figure 7 montre un distributeur fluidique 11 disposé axialement porté par une pièce de fixation 14, et commandé par deux cames 12' à simple effet disposées en opposition dans les deux extrémités axiales de la machine 1. Les deux cames 12' à simple effet sont équivalentes à la came 12 à double effet décrite précédemment. Dans cet exemple, le distributeur 11 comporte deux tiges de commande 16 alignées, reliées aux deux extrémités opposées de son tiroir, et portant chacune à son extrémité libre un organe suiveur 13 coopérant avec l'une des cames 12'. Ce type de montage permet d'équilibrer les efforts de guidage et de commande du système de distribution fluidique. Dans cette variante, le distributeur fluidique 11 unique par élément actif 2 est une vanne à 5/2 voies ou 4/2 voies. Dans une variante non représentée, le distributeur fluidique 11 unique peut être remplacé par deux distributeurs sous la forme de vannes à 3/2 voies ou 4/2 voies, reliés entre eux et chacun commandé par une des deux cames 12'.

La figure 8 montre un distributeur fluidique 11 disposé radialement selon l'axe Z, dans une des extrémités axiales de la machine 1, et commandé par une seule came 12 disposée dans ladite extrémité axiale, ouverte axialement dans l'axe X. Dans cet exemple, le distributeur 11 est une vanne à 5/2 voies, la tige de commande 16 du tiroir s'étend dans l'axe Z et l'organe suiveur 13 s'étend dans l'axe X.

La figure 9 montre une disposition similaire à la figure 8, dans laquelle le distributeur fluidique 11 est disposé radialement selon l'axe Z mais commandé par deux cames 12' à simple effet en opposition, comme dans la figure 7. Dans cette variante, le distributeur fluidique 11 unique par élément actif 2 est une vanne à 5/2 voies ou à 4/2 voies. Dans une variante non représentée, le distributeur fluidique 11 unique peut être remplacé par deux distributeurs sous la forme de vannes à 3/2 voies ou à 4/2 voies, chacun commandé par une des deux cames 12'.

La figure 10 montre une machine magnétocalorique 1 selon une variante de réalisation de l'invention, dans laquelle les distributeurs fluidiques 11 et le dispositif de commande fluidique 10 sont séparés du reste de la machine, qui comporte notamment l'ensemble d'éléments actifs 2 et l'arrangement magnétique 3, l'un porté par un stator S et l'autre par un rotor R. Dans cette configuration, la came 12 est couplée à un actionneur dédié 20 tel qu'un moteur, et est guidée en rotation dans un support fixe (non représenté). Les distributeurs fluidiques 11 sont quant à eux liés audit support fixe par leurs pièces de fixation 14. Les distributeurs fluidiques 11 sont en outre raccordés aux éléments actifs 2 par des conduits fluidiques 21 appropriés.

L'actionneur dédié 20 peut être commandé par une unité de pilotage (non représentée) prévue pour synchroniser le fonctionnement de l'actionneur dédié 20 de la came 12 avec celui du rotor R, notamment lorsque la machine magnétocalorique 1 fonctionne en générateur de froid magnétique. Ce n'est pas le cas lorsque la machine magnétocalorique 1 fonctionne en convertisseur thermique agencé pour récupérer l'énergie thermique issue de chaleurs fatales perdues, puisque c'est le dispositif de commande fluidique 10 qui induit la rotation du rotor R. Dans ce mode de fonctionnement, le rotor R peut être couplé à un générateur électrique pour produire de l'énergie électrique.

Le dispositif de commande fluidique 10 représenté à la figure 10 correspond à celui représenté à la figure 7, à savoir que les distributeurs fluidiques 11 sont positionnés axialement et commandés par deux cames 12' à simple effet disposées en opposition. Bien entendu, les autres dispositions radiales illustrées dans les figures 8 et 9 peuvent également s'adapter à cette variante de réalisation, ainsi que toute autre configuration compatible.

## Revendications

1. Dispositif de commande fluidique (10), notamment pour une machine magnétocalorique (1) comportant au moins un distributeur fluidique (11) raccordé à un circuit fluidique (5), ledit au moins un distributeur fluidique comportant un tiroir mobile agencé pour être déplacé entre deux positions de distribution, ledit dispositif de commande (10) comportant une came (12) mobile agencée pour coopérer avec un organe suiveur (13), ladite came (12) étant couplée à un actionneur, et ledit organe suiveur (13) étant couplé au tiroir dudit distributeur (11), ladite came (12) comportant un profil de came pourvu au moins d'un premier tronçon (T1) définissant une première position de distribution, d'un second tronçon (T2) définissant une seconde position de distribution, et d'une zone de transition (ZT) reliant ledit premier tronçon (T1) audit second tronçon (T2), dispositif de commande **caractérisé en ce que** ladite came (12) est une came à double effet agencée pour déplacer ledit organe suiveur (13) en translation alternative dans un sens et dans le sens opposé correspondant respectivement à ladite première position de distribution et à ladite seconde position de distribution dudit distributeur (11), et **en ce que** ledit organe suiveur (13) comporte un premier élément de guidage (131) agencé pour circuler librement dans ladite came (12), et un second élément de guidage (132) agencé pour circuler librement dans une glissière (15) fixe par rapport audit au moins un distributeur (11), pour guider ledit organe suiveur (13) en translation alternative entre lesdites deux positions de distribution.

2. Dispositif de commande fluidique selon la revendication 1, **caractérisé en ce que** le profil de ladite came (12) comporte une gorge (121) en forme de U agencée pour entraîner ledit premier élément de guidage (131) dans les deux sens de déplacement.

3. Dispositif de commande fluidique selon l'une des revendications 1 et 2, **caractérisé en ce que** ledit organe suiveur (13) s'étend dans un axe perpendiculaire à l'axe du distributeur (11) et à l'axe du profil de ladite came (12).

4. Dispositif de commande fluidique selon l'une quelconque des revendications 1 à 3, **caractérisé en ce que** ledit organe suiveur (13) comporte deux extrémités libres opposées, et **en ce que** le premier élément de guidage (131) et le second élément de guidage (132) sont fixés respectivement auxdites extrémités libres.

5. Dispositif de commande fluidique selon l'une quelconque des revendications 1 à 4, **caractérisé en ce que** le premier élément de guidage (131) et/ou le second élément de guidage (132) dudit organe suiveur (13) est choisi dans le groupe comportant un roulement, un galet, un coussinet, un patin, un doigt.

6. Dispositif de commande fluidique selon l'une quelconque des revendications 1 à 5, **caractérisée en ce que** la glissière (15) fixe est prévue dans une pièce de fixation (14) solidaire dudit au moins un distributeur fluidique (11), et **en ce que** ledit au moins un distributeur (11) comporte des moyens de réglage agencés pour ajuster la position de son tiroir mobile et de l'organe suiveur (13) par rapport à ladite came (12).

7. Dispositif de commande fluidique selon l'une quelconque des revendications 1 à 6, **caractérisé en ce que** ladite came (12) est circulaire et entrainée en rotation continue, et **en ce que** ledit profil de came est fermé sur lui-même.

8. Dispositif de commande fluidique selon l'une quelconque des revendications 1 à 6, **caractérisé en ce que** ladite came est rectiligne et entrainée en translation alternative, et **en ce que** ledit profil de came est ouvert.

9. Dispositif de commande fluidique selon l'une quelconque des revendications 1 à 8, **caractérisé en ce que** ladite came (12) est formée d'une pièce unique, ou d'au moins deux pièces complémentaires.

10. Machine magnétocalorique (1) comportant au moins un distributeur fluidique (11) raccordé à un circuit fluidique (5), un arrangement magnétique (3), un ensemble d'éléments actifs (2) à base de matériau magnétocalorique, ledit arrangement magnétique (3) et ledit ensemble d'éléments actifs (2) étant agencés pour être mobiles relativement l'un par rapport à l'autre, et un fluide caloporteur agencé pour circuler dans ledit circuit fluidique (5) à travers lesdits éléments actifs (2), **caractérisée en ce qu'**elle comporte un dispositif de commande fluidique (10) selon l'une quelconque des revendications 1 à 9, couplé audit au moins un distributeur fluidique (11) et agencé pour faire circuler ledit fluide caloporteur dans une première boucle thermique (5a) dudit circuit fluidique (5) puis dans une seconde boucle thermique (5b) dudit circuit fluidique (5) en fonction d'une fréquence de commutation déterminée.

11. Machine magnétocalorique selon la revendication 10, **caractérisée en ce que** ledit dispositif de commande fluidique (10) est séparé dudit arrangement magnétique (3) et dudit ensemble d'éléments actifs (2), et **en ce que** ladite came (12) est couplée à un actionneur dédié (20).

12. Machine magnétocalorique selon la revendication 10, **caractérisée en ce que** ledit dispositif de commande fluidique (10) est intégré audit arrangement magnétique (3) et audit ensemble d'éléments actifs (2), et **en ce que** ladite came (12) est couplée à un ensemble mobile (R) de la machine portant ledit arrangement magnétique (3) ou ledit ensemble d'éléments actifs (2).

13. Machine magnétocalorique selon l'une quelconque des revendications 10 à 12, **caractérisée en ce qu'**elle comporte un distributeur (11) par élément actif (2) agencé pour distribuer ledit fluide caloporteur alternativement dans ladite première boucle thermique (5a) et dans ladite seconde boucle thermique (5b), et **en ce que** ledit dispositif de commande fluidique (10) comporte une came (12).

14. Machine magnétocalorique selon l'une quelconque des revendications 10 à 12, **caractérisée en ce qu'**elle comporte deux distributeurs (11) par élément actif (2) agencés chacun pour distribuer ledit fluide caloporteur dans une de ladite première boucle thermique (5a) ou de ladite seconde boucle thermique (5b), et **en ce que** ledit dispositif de commande fluidique (10) comporte deux cames (12, 12') parallèles.

15. Machine magnétocalorique selon l'une quelconque des revendications 12 à 14, **caractérisée en ce que** ledit au moins un distributeur (11) est disposé axialement et parallèlement à l'axe dudit actionneur dédié (20) ou dudit ensemble mobile (R).

16. Machine magnétocalorique selon l'une quelconque des revendications 12 à 14, **caractérisée en ce que** ledit au moins un distributeur (11) est disposé radialement et perpendiculairement à l'axe dudit actionneur dédié (20) ou dudit ensemble mobile (R).

17. Machine magnétocalorique selon l'une quelconque des revendications 12 à 16, dans laquelle ledit ensemble mobile (R) porte ledit arrangement magnétique (3), **caractérisée en ce que** ladite came (12) est fixée sur ledit ensemble mobile (R), et **en ce que** ladite came (12) comporte des moyens de réglage (123) agencés pour ajuster la position relative de la came (12) par rapport aux pôles magnétiques (3) dudit arrangement magnétique.

## Patentansprüche

1. Fluidsteuervorrichtung (10), insbesondere für eine thermomagnetische Maschine (1) mit mindestens einem Fluidverteiler (11), verbunden mit einem Fluidkreislauf (5), dieser mindestens eine Fluidverteiler enthält einen mobilen Schieber, vorgesehen zur Verschiebung zwischen zwei Verteilpositionen, die Steuervorrichtung (10) enthält eine mobile Nocke (12), dazu vorgesehen, mit einem Folgeelement (13) zusammenzuarbeiten, diese Nocke (12) ist an ein Stellglied gekoppelt und das erwähnte Folgeelement (13) ist an den Schieber des erwähnten Verteilers (11) gekoppelt, die erwähnte Nocke (12) enthält eine Kurvenscheibe, versehen mit mindestens einem Abschnitt (Tl), der eine erste Verteilposition definiert, einem zweiten Abschnitt (T2), der eine zweite Verteilposition definiert , und einer Übergangszone (ZT), die den ersten Abschnitt (Tl) mit dem erwähnten zweiten Abschnitt (T2) verbindet, Steuervorrichtung, **dadurch gekennzeichnet, dass** es sich bei der erwähnten Nocke (12) um eine Doppeleffektnocke handelt, um dieses Folgeelement (13) in Translation zu verschieben, alternativ in eine Richtung und die Gegenrichtung, was jeweils der ersten Verteilposition und der erwähnten zweiten Verteilposition dieses Verteilers (11) entspricht, und dadurch, dass dieses Folgeelement (13) ein erstes Führungselement (131) enthält, das frei in dieser Nocke (12) läuft und ein zweites Führungselement (132) das frei in einer Gleitschiene (15) läuft, die fest ist in Bezug zu diesem mindestens einen Verteiler (11), um dieses Folgeelement (13) in alternativer Translation zwischen diesen beiden Verteilpositionen zu führen..

2. Fluidsteuervorrichtung nach Anspruch 1, **dadurch gekennzeichnet, dass** das Profil der erwähnten Nocke (12) eine U-förmige Rille (121) enthält, vorgesehen um das erwähnte erste Führungselement (131) in beiden Richtungen anzutreiben.

3. Fluidsteuervorrichtung nach einem der Ansprüche 1 und 2, **dadurch gekennzeichnet, dass** das erwähnte Folgeelement (13) in einer Achse senkrecht zur Achse des Verteilers (11) und zur Profilachse dieser Nocke (12) verläuft

4. Fluidsteuervorrichtung nach irgendeinem der vorstehenden Ansprüche 1 bis 3, **dadurch gekennzeichnet, dass** das erwähnte Folgeelement (13) zwei gegenüberliegende freie Endstücke enthält und dass dieses erste Führungselement (131) und das zweite Führungselement (132) jeweils an den erwähnten freien Endstücken befestigt sind.

5. Fluidsteuervorrichtung nach irgendeinem der vorstehenden Ansprüche 1 bis 4, **dadurch gekennzeichnet, dass** das erste Führungselement (131) und/ oder das zweite Führungselement (132) dieses Folgeelementes (13) ausgewählt wird aus der Gruppe bestehend aus einer Laufrolle, einer Rolle, einer Lagerbuchse, einen Schuh, einem Finger.

6. Fluidsteuervorrichtung nach irgendeinem der vorstehenden Ansprüche 1 bis 5, **dadurch gekennzeichnet, dass** die feste Gleitschiene (15) vorgesehen ist in einem Befestigungsteil (14), das an dem erwähnten mindestens einen Fluidverteiler (11) fest montiert ist, und dass dieser mindestens eine Verteiler (11) Regelvorrichtungen enthält, um die Position seines mobilen Schiebers und des Folgeelementes (13) bezogen auf diese Nocke (12) einzustellen.

7. Fluidsteuervorrichtung nach irgendeinem der vorstehenden Ansprüche 1 bis 6, **dadurch gekennzeichnet, dass** diese Nocke (12) kreisförmig ist und kontinuierlich in Rotation angetrieben wird, und dadurch, dass die erwähnte Kurvenscheibe in sich selbst geschlossen ist.

8. Fluidsteuervorrichtung nach irgendeinem der vorstehenden Ansprüche 1 bis 6, **dadurch gekennzeichnet, dass** diese Nocke geradlinig und in alternativer Translation angetrieben wird und dass die erwähnte Kurvenscheibe offen ist.

9. Fluidsteuervorrichtung nach irgendeinem der vorstehenden Ansprüche 1 bis 8, **dadurch gekennzeichnet, dass** die erwähnte Nocke (12) aus einem einzigen Stück besteht oder aus mindestens zwei komplementären Teilen.

10. Thermomagnetische Maschine (1) mit mindestens einem Fluidverteiler (11) verbunden mit einem Fluidkreislauf (5), einer Magnetanordnung (3), einem Bauteil aus aktiven Elementen (2) auf Grundlage thermomagnetischen Materials, wobei die Magnetanordnung (3) und das Bauteil aus aktiven Elementen (2) so vorgesehen sind, dass sie im Verhältnis zueinander mobil sind, sowie einer Wärmeträgerflüssigkeit, dazu vorgesehen, im genannten Fluidkreislauf (5) durch die erwähnten aktiven Elemente (2) zu zirkulieren, **dadurch gekennzeichnet, dass** sie eine Fluidsteuervorrichtung (10) nach irgendeinem der vorstehenden Ansprüche 1 bis 9 enthält, gekoppelt an diesen mindestens einen Fluidverteiler (11) und dazu vorgesehen, die Wärmeträgerflüssigkeit in einer ersten Wärmeschleife (5a) dieses Fluidkreislaufs (5) zu zirkulieren, dann in einer zweiten Wärmeschleife (5b) dieses Fluidkreislaufs (5) in Abhängigkeit von einer bestimmten Schaltfrequenz.

11. Thermomagnetische Maschine nach Anspruch 10, **dadurch gekennzeichnet, dass** die erwähnte Fluidsteuervorrichtung (10) von der erwähnten Magnetanordnung (3) und dem erwähnten Bauteil aus aktiven Elementen (2) getrennt ist, und dadurch, dass die erwähnte Nocke (12) an ein spezielles Stellglied (20) gekoppelt ist.

12. Thermomagnetische Maschine nach Anspruch 10, **dadurch gekennzeichnet, dass** die erwähnte Fluidsteuervorrichtung (10) in der Magnetanordnung (3) und dem Bauteil aus aktiven Elementen (2) integriert ist, und dadurch, dass diese Nocke (12) an ein mobiles Bauteil (R) der Maschine gekoppelt ist, das diese Magnetanordnung (3) oder dieses Bauteil aus aktiven Elementen (2) trägt.

13. Thermomagnetische Maschine nach irgendeinem der vorstehenden Ansprüche 10 bis 12, **dadurch gekennzeichnet, dass** sie einen Verteiler (11) pro aktivem Element (2) enthält, vorgesehen zur Verteilung der erwähnten Wärmeträgerflüssigkeit alternativ in die erste Wärmeschleife (5a) und in die zweite Wärmeschleife (5b), und dadurch, dass die Fluidsteuervorrichtung (10) eine Nocke (12) enthält.

14. Thermomagnetische Maschine nach irgendeinem der vorstehenden Ansprüche 10 bis 12, **dadurch gekennzeichnet, dass** sie zwei Verteiler (11) pro aktivem Element (2) enthält, jeweils vorgesehen zur Verteilung der erwähnten Wärmeträgerflüssigkeit alternativ in die erste Wärmeschleife (5a) und in die zweite Wärmeschleife (5b), und dadurch, dass die Fluidsteuervorrichtung (10) zwei parallele Nocken (12, 12') enthält.

15. Thermomagnetische Maschine nach irgendeinem der vorstehenden Ansprüche 12 bis 14, **dadurch gekennzeichnet, dass** dieser mindestens eine Verteiler (11) axial und parallel zur Achse dieses speziellen Stellgliedes (20) oder dieses mobilen Bauteils (R) angeordnet ist.

16. Thermomagnetische Maschine nach irgendeinem der vorstehenden Ansprüche 12 bis 14, **dadurch gekennzeichnet, dass** der erwähnte, mindestens eine Verteiler (11) radial und senkrecht zur Achse dieses speziellen Stellgliedes (20) oder dieses mobilen Bauteils (R) angeordnet ist.

17. Thermomagnetische Maschine nach irgendeinem der vorstehenden Ansprüche 12 bis 16, in der das erwähnte mobile Bauteil (R) diese Magnetanordnung (3) trägt, **dadurch gekennzeichnet, dass** die Nocke (12) auf diesem mobilen Bauteil (R) befestigt ist, und dadurch, dass diese Nocke (12) Einstellelemente (123) enthält, vorgesehen um die relative Position der Nocke (12) bezogen auf die Magnetpole (3) dieser Magnetanordnung einzustellen.

## Claims

1. A fluidic control device (10), in particular for a magnetocaloric machine (1) comprising at least one fluidic distributor (11) connected to a fluidic circuit (5), said at least one fluidic distributor comprising a movable slide disposed to be displaced between two distribution positions, said control device (10) comprising a movable cam (12) disposed to cooperate with a follower member (13), said cam (12) being coupled to an actuator, and said follower member (13) being coupled to the slide of said distributor (11), said cam (12) comprising a cam profile provided with at least a first section (T1) defining a first distribution position, with a second section (T2) defining a second distribution position, and with a transition zone (ZT) connecting said first section (T1) to said second section (T2), the control device being **characterized in that** said cam (12) is a double-acting cam disposed to displace said follower member (13) in reciprocating translation in one direction and in the opposite direction respectively corresponding to said first distribution position and to said second distribution position of said distributor (11), and **in that** said follower member (13) comprises a first guide element (131) disposed to move freely in said cam (12), and a second guide element (132) disposed to move freely in a slideway (15) which is fixed with respect to said at least one distributor (11), in order to guide said follower member (13) in reciprocating translation between said two distribution positions.

2. The fluidic control device as claimed in claim 1, **characterized in that** the profile of said cam (12) comprises a U-shaped groove (121) disposed to drive said first guide element (131) in both displacement directions.

3. The fluidic control device as claimed in any one of claims 1 and 2, **characterized in that** said follower member (13) extends along an axis perpendicular to the axis of the distributor (11) and to the axis of the profile of said cam (12).

4. The fluidic control device as claimed in any one of claims 1 to 3, **characterized in that** said follower member (13) comprises two opposed free ends, and **in that** the first guide element (131) and the second guide element (132) are respectively mounted on said free ends.

5. The fluidic control device as claimed in any one of claims 1 to 4, **characterized in that** the first guide element (131) and/or the second guide element (132) of said follower member (13) is selected from the group comprising a bearing, a roller, a bearing bush, a shoe, a finger.

6. The fluidic control device as claimed in any one of claims 1 to 5, **characterized in that** the fixed slideway (15) is provided in a mounting part (14) which is integral with said at least one fluidic distributor (11), and **in that** said at least one distributor (11) comprises adjustment means disposed to adjust the position of its movable slide and of the follower member (13) with respect to said cam (12).

7. The fluidic control device as claimed in any one of claims 1 to 6, **characterized in that** said cam (12) is circular and driven in continuous rotation, and **in that** said cam profile is closed on itself.

8. The fluidic control device as claimed in any one of claims 1 to 6, **characterized in that** said cam is rectilinear and driven in reciprocating translation, and **in that** said cam profile is open.

9. The fluidic control device as claimed in any one of claims 1 to 8, **characterized in that** said cam (12) is formed by a single part, or by at least two complementary parts.

10. A magnetocaloric machine (1) comprising at least one fluidic distributor (11) connected to a fluidic circuit (5), a magnetic arrangement (3), a set of active elements (2) based on magnetocaloric material, said magnetic arrangement (3) and said set of active elements (2) being disposed to be movable relative to each other, and a heat transfer fluid disposed to circulate in said fluidic circuit (5) through said active elements (2), **characterized in that** it comprises a fluidic control device (10) as claimed in any one of claims 1 to 9, coupled to said at least one fluidic distributor (11) and disposed to cause said heat transfer fluid to circulate in a first thermal loop (5a) of said fluidic circuit (5) then in a second thermal loop (5b) of said fluidic circuit (5) as a function of a specific switching frequency.

11. The magnetocaloric machine as claimed in claim 10, **characterized in that** said fluidic control device (10) is separate from said magnetic arrangement (3) and from said set of active elements (2), and **in that** said cam (12) is coupled to a dedicated actuator (20).

12. The magnetocaloric machine as claimed in claim 10, **characterized in that** said fluidic control device (10) is integrated into said magnetic arrangement (3) and into said set of active elements (2), and **in that** said cam (12) is coupled to a movable assembly (R) of the machine carrying said magnetic arrangement (3) or said set of active elements (2).

13. The magnetocaloric machine as claimed in any one of claims 10 to 12, **characterized in that** it comprises one distributor (11) per active element (2) disposed to distribute said heat transfer fluid alternately in said first thermal loop (5a) and in said second thermal loop (5b), and **in that** said fluidic control device (10) comprises a cam (12).

14. The magnetocaloric machine as claimed in any one of claims 10 to 12, **characterized in that** it comprises two distributors (11) per active element (2) each disposed to distribute said heat transfer fluid in one of said first thermal loop (5a) or said second thermal loop (5b), and **in that** said fluidic control device (10) comprises two parallel cams (12, 12').

15. The magnetocaloric machine as claimed in any one of claims 12 to 14, **characterized in that** said at least one distributor (11) is disposed axially and parallel to the axis of said dedicated actuator (20) or said movable assembly (R).

16. The magnetocaloric machine as claimed in any one of claims 12 to 14, **characterized in that** said at least one distributor (11) is disposed radially and perpendicular to the axis of said dedicated actuator (20) or said movable assembly (R).

17. The magnetocaloric machine as claimed in any one of claims 12 to 16, in which said movable assembly (R) supports said magnetic arrangement (3), **characterized in that** said cam (12) is mounted on said movable assembly (R), and **in that** said cam (12) comprises adjustment means (123) disposed to adjust the relative position of the cam (12) with respect to the magnetic poles (3) of said magnetic arrangement.
